# EUROPEAN PATENT APPLICATION

(11) **EP 0 975 132 A1**
(43) Date of publication of application: **26.01.2000**
(21) Application number: 98440158.8
(22) Date of filing: 20.07.1998
(51) Int. Cl.: H04M 1/72

(54) **Telecommunication system comprising at least a mobile phone and at least a camera unit**

(71) Applicant: ALCATEL, 75088 Paris (FR)
(72) Inventor: Lecomte, Daniel Jean, 75116 Paris (FR)
(74) Representative: van Bommel, Jan Peter

(57) **Abstract**

The disadvantages of a fully integrated camera unit and mobile phone can be avoided and the advantages of such a combination can be kept by providing both with connector means for making a disconnectable connection and by using the mobile phone for at least partly controlling the camera unit.

## Description

The invention relates to a telecommunication system comprising at least a mobile phone and at least a camera unit said mobile phone comprising
- a high-frequency pad coupled to an antennae, and
- a low frequency pad comprising a processor coupled to said high-frequency pad and comprising input/output means coupled to said processor via interface means,
   and said camera unit comprising
- conversion means for converting optical images into video signals, and
- processor means for processing said video signals.

Such a telecommunication system is known from WO 96/35288 which discloses a fully integrated system.

Such a fully integrated system is disadvantageous, inter alia, because of sometimes only a small and compact mobile phone should be available.

It is an object of the invention, inter alia, to provide a telecommunication system as disclosed in the preamble which allows fysical separation of said mobile phone and said camera unit.

Thereto, the telecommunication system according to the invention is characterised in that said mobile phone and said camera unit each comprise connector means for making a disconnectable connection and for exchanging processed video signals and for exchanging control signals via at least pad of said interface means.

By providing said mobile phone and said camera unit with said connector means for making a disconnectable connection, a user has the option of at least either taking the mobile phone alone and separately or using the combination, with the exchange of control signals via said connector means being extremely advantageous due to allowing said camera unit at least partly to be controlled via said mobile phone.

The invention is based on the insight, inter alia, that both the advantages of a fully integrated system and of a completely separated system can be combined by introducing connector means for making a disconnectable connection and using at least pad of the interface means of the mobile phone for controlling the camera unit.

The invention solves the problem, inter alia, of providing a system which is very user-friendly.

A first embodiment of the telecommunication system according to the invention is characterised in that said input/output means comprise a display for displaying mobile phone information and for displaying said processed video signals.

By using the display of the mobile phone also for displaying said processed video signals, for example the camera unit no longer does have to be provided with such a display, and/or for example the display of the mobile phone can be used at the same time for displaying said processed video signals and showing control information defining at what moment and/or what part of the processed video signals are stored in said system and/or transmitted via a mobile network (and possibly a non-mobile network and/or Internet) to a server.

A second embodiment of the telecommunication system according to the invention is characterised in that said input/output means comprise keys for controlling said mobile phone and for controlling at least a part of said camera unit.

By using the keys of the mobile phone also for controlling at least a part of said camera unit for example the camera unit no longer does have to be provided with such keys, and/or for example the keys of the mobile phone can be used for controlling at what moment and/or what part of the processed video signals are stored in said system and/or transmitted via a mobile network (and possibly a non-mobile network and/or Internet) to a server.

A third embodiment of the system according to the invention is characterised in that said mobile phone comprises a memory for storing at least a pad of said processed video signals.

In this case the memory of the mobile phone is used for storing at least a pad of said processed video signals, thereby allowing the memory of the camera unit to be reduced or even to be avoided.

A fourth embodiment of the system according the invention is characterised in that at least a part of said connector means comprise further connector means for making a disconnectable connection with a pc for exchanging processed video signals and for exchanging control signals via at least pad of said interface means.

In this case the mobile phone is used for making a connection with a pc, for example for further processing processed video signals stored in the system, thereby allowing the interface means (for interfacing with a pc) inside the camera to be reduced or even to be avoided.

The invention further relates to a mobile phone comprising
- a high-frequency part coupled to an antennae, and
- a low frequency part comprising a processor coupled to said high-frequency part and comprising input/output means coupled to said processor via interface means.

The mobile phone according to the invention is characterised in that said mobile phone comprises connector means for making a disconnectable connection with a camera unit and for exchanging processed video signals and for exchanging control signals via at least part of said interface means.

A first embodiment of the mobile phone according to the invention is characterised in that said input/output means comprise a display for displaying mobile phone information and for displaying said processed video signals.

A second embodiment of the mobile phone according to the invention is characterised in that said input/output means comprise keys for controlling said mobile phone and for controlling at least a part of said camera unit.

The invention yet further relates to a camera unit comprising
- conversion means for converting optical images into video signals, and
- processor means for processing said video signals.

The camera unit according to the invention is characterised in that said camera unit comprises connector means for making a disconnectable connection with a mobile phone comprising a processor and input/output means coupled to said processor via interface means and for exchanging processed video signals and for exchanging control signals via at least part of said interface means.

A first embodiment according to the invention is characterised in that said input/output means comprise keys for controlling said mobile phone and for controlling at least a pad of said camera unit.

The document WO 96/35288 discloses a fully integrated system, the system according to the invention is not known from this reference. All references, including the references cited with respect to said reference, are considered to be incorporated in this patent application.

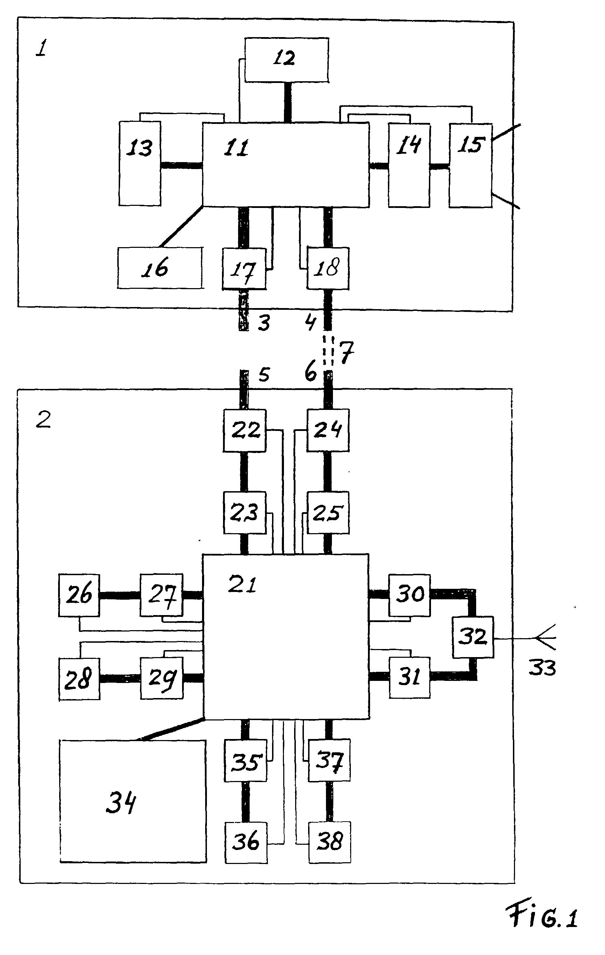

The invention will be further explained at the hand of an embodiment described with respect to a drawing, whereby
figure 1 discloses a telecommunication system according to the invention, comprising a mobile phone according to the invention and a camera unit according to the invention.

The telecommunication system disclosed in figure 1 comprises a camera unit 1 and a mobile phone 2. Camera unit 1 comprises processor means 11 and conversion means 14,15 consisting of a sensor 15 and an analog-to-digital converter 14 for converting optical signals into video signals which are being processed by processor means 11. Camera unit 1 could further comprise a microphone 12, a keyboard 13, a memory 16 and a first connector 17 having an external connection possibility 3 for coupling said camera unit 1 to for example a pc. Camera unit 1 also comprises a second connector 18 having an external connection possibility 4 for coupling said camera unit 1 to said mobile phone 2 via a disconnectable connection 7.

Mobile phone 2 comprises a high-frequency part 30,31,32 consisting of modulation means 30, demodulation means 31 both coupled to a forked circuit 32 which is coupled to an antennae 33, and a low-frequency pad 21-29,34-38. Said low-frequency pad consists of a processor 21, a third connector 22 having an external connection possibility 23 for coupling said mobile phone 2 to for example a pc, which third connector 22 is coupled to processor 21 via interface means 23, a fourth connector 24 having an external connection possibility 6 for coupling said mobile phone 2 to said camera unit 1 via said disconnectable connection 7, which fourth connector 24 is coupled to processor 21 via interface means 25, a display 26 coupled to processor 21 via interface means 27, a keyboard 28 coupled to processor 21 via interface means 29, a memory 34 coupled to processor 21, a microphone 36 coupled to processor 21 via interface means 35, and a loudspeaker 38 coupled to processor 21 via interface means 37.

At least one of said third connector 22, fourth connector 24, display 26, keyboard 28, microphone 36 and loudspeaker 38 could be considered to be input/output means for receiving input signals (for example from a user pressing the keys and/or speaking into the microphone) and/or generating output signals (for example to the display or to the loudspeaker).

At least one of said connectors 18 and 24 could be considered to be connector means for making a disconnectable connection.

The telecommunication system functions as follows. When disconnected, mobile phone 2 can be used as an ordinary mobile phone, and camera unit 1, in case of being provided with keyboard 13 and memory 16 (a mechanical or non-mechanical memory), can be used as an ordinary camera.

When connected via disconnectable connection 7 (which can be a mechanical cable-connection or an infrared-connection or a mechanical pin/plug-connection or even a radio-connection) mobile phone 2 can still be used as an ordinary mobile phone, and camera unit 1 can still be used as an ordinary camera unit, but now with said processed video signals originating from processor means 11 and control signals related to at least one camera function flowing via at least one of said interface means 23, 25, 27, 29, 35 and 37.

According to a first embodiment, display 26 can be used for displaying not just mobile phone information, but also for displaying said processed video signals, in which case interface means 25 and 27 are involved, and camera unit 1 does not have to be provided with such a display.

According to a second embodiment, keyboard 28 can be used for controlling mobile phone 2 as well as for controlling at least a part of camera unit 1, in which case interface means 25 and 29 are involved, and camera unit 1 does not have to be provided with such a keyboard or can be provided with a less complex and cheaper keyboard.

According to a third embodiment, memory 34 is used for storing at least a pad of said processed video signals, in which case interface means 25 are involved, and camera unit 1 does not have to be provided with memory 16 for storing said processed video signals or can be provided with a smaller and cheaper memory (of course camera unit 1 wil always need some memory capacity for processor means 11).

According to a fourth embodiment, third connector 22 being coupled to a pc is used for coupling camera unit 1 to said pc, in which case interface means 25 and 23 are involved, and camera unit 1 does not have to be provided with first connector 17.

Said processor means 11 and said processor 21 could of course comprise one or more processing units and one or more bussystems, and in mobile phone 2 the interface means 23, 25, 27, 29, 35 and 37 could be partly or entirely be integrated into processor 21. In general, there will be at least two different kinds of connections, control connections (thin lines) and data (audio and/or video) connections (thick lines) which also could be used for exchanging control signals.

With said telecommunication system at least two different kinds of video signals could be processed: photographs (still pictures) and film-images (moving pictures), which all can be either stored in memory 34 (and later to be supplied to for example a pc via first connector 22) or transmitted via antennae 33 and a mobile network (and possibla a non-mobile network and/or Internet) to a server or a pc at home etc. The number of photographs and the length of film-images to be stored in memory 34 depends upon the storage capacity of this memory and the coding scheme.

Of course, almost all functions of camera unit 1 could be shifted to mobile phone 2, for example (a pad of) the processing functions of processing means 11 which could be carried out by processor 21, but without a full integration of both units 1 and 2, so with at least sensor 15 and analog-to-digital converter 14 (generally then comprising at least some of the processing functions of processor means 11) and second connector 18 being present in camera unit 1. Further, sensor 15 and an analog-to-digital converter 14 could be fully integrated into one conversion means 14,15 for converting optical signals into video signals.

## Claims

1. Telecommunication system comprising at least a mobile phone and at least a camera unit, said mobile phone comprising
- a high-frequency pad coupled to an antennae, and
- a low frequency pad comprising a processor coupled to said high-frequency pad and comprising input/output means coupled to said processor via interface means,
and said camera unit comprising
- conversion means for converting optical images into video signals, and
- processor means for processing said video signals,
characterised in that said mobile phone and said camera unit each comprise connector means for making a disconnectable connection and for exchanging processed video signals and for exchanging control signals via at least pad of said interface means.

2. Telecommunication system according to claim 1, characterised in that said input/output means comprise a display for displaying mobile phone information and for displaying said processed video signals.

3. Telecommunication system according to claim 1 or 2, characterised in that said input/output means comprise keys for controlling said mobile phone and for controlling at least a part of said camera unit.

4. Telecommunication system according to claim 1, 2 or 3, characterised in that said mobile phone comprises a memory for storing at least a pad of said processed video signals.

5. Telecommunication system according to claim 1, 2, 3 or 4, characterised in that at least a pad of said connector means comprise further connector means for making a disconnectable connection with a pc for exchanging processed video signals and for exchanging control signals via at least pad of said interface means.

6. Mobile phone comprising
- a high-frequency pad coupled to an antennae, and
- a low frequency pad comprising a processor coupled to said high-frequency pad and comprising input/output means coupled to said processor via interface means,
characterised in that said mobile phone comprises connector means for making a disconnectable connection with a camera unit and for exchanging processed video signals and for exchanging control signals via at least pad of said interface means.

7. Mobile phone according to claim 6, characterised in that said input/output means comprise a display for displaying mobile phone information and for displaying said processed video signals.

8. Telecommunication system according to claim 6 or 7, characterised in that said input/output means comprise keys for controlling said mobile phone and for controlling at least a part of said camera unit.

9. Camera unit comprising
- conversion means for converting optical images into video signals, and
- processor means for processing said video signals,
characterised in that said camera unit comprises connector means for making a disconnectable connection with a mobile phone comprising a processor and input/output means coupled to said processor via interface means and for exchanging processed video signals and for exchanging control signals via at least part of said interface means.

10. Camera unit according to claim 9, characterised in that said input/output means comprise keys for controlling said mobile phone and for controlling at least a part of said camera unit.
